# EUROPEAN PATENT APPLICATION

(11) **EP 1 859 910 A1**
(43) Date of publication of application: **28.11.2007**
(21) Application number: 07114716.9
(22) Date of filing: 14.02.2006
(51) Int. Cl.: B26B 15/00, A01G 3/053

(54) **Power tool with interchangeable blades and method**

(30) Priority: 07.09.2005 US 220472
(62) Divisional of application: 06101663.0
(71) Applicant: Black & Decker, Inc., Newark, DE 19711 (US)
(72) Inventor: Mooney, Patrick W., Brockville Ontario K6V 5T2 (CA); Rosa, Richard, Kingston Ontario K7M 8XT (CA)
(74) Representative: Bell, Ian Stephen

(57) **Abstract**

A power tool and system for trimming and cutting vegetation are disclosed. A method of attaching a working assembly, such as blade carrier assembly, to a power tool is also disclosed. The power tool includes interchangeable cutting elements that can be readily attached and detached from a main body portion without any preliminary alignment steps. The main body portion of the power tool includes a selectively actuatable motor including a rotary output and a rotary drive element including a resiliently biased drive pin. Blade carrier assemblies are capable of being selectively and removably attached to the main body portion and each include a moveable blade portion having a drive pin slot. Upon attaching a blade carrier assembly to the main body portion and actuating the motor, the resiliently biased drive pin is rotatable to a position such that the drive pin is resiliently forced into the drive pin slot of the working piece to actuate the working assembly.

## Description

The present teachings relate to a handheld power tool having readily interchangeable cutting elements for trimming and cutting vegetation. More particularly, the present teachings relate to a resiliently biased driving element formed on a main body portion of the power tool that automatically engages various interchangeable blade carrier assemblies to allow a user to perform different types of cutting processes in a quick and safe manner.

Known power tools having interchangeable blades are cumbersome and potentially dangerous to manipulate. For example, U.S. Patent No. 3,959,848 to Irelan et al., discloses a convertible portable electric tool having interchangeable tool pieces. Each of the interchangeable tool pieces include two parts, a stationary element and a moving element, which are pivoted together at a pin. The stationary element includes a comb of teeth and, likewise, the moving element includes a comb of teeth. The rearward end of the moving element includes an elongated opening for receipt of a drive member. The drive member is rotated by a gear and the resulting circular movement oscillates the moving element about the pivot pin. As a result, the stationary element and the moving element lap one another to cut grass between the teeth upon oscillation of the moving element.

Before attaching a tool piece assembly to the power housing, the user must first rotate the drive member to a predetermined position, such as a top dead center position. Similarly, the user must manually orient the moving element into a predetermined position with respect to the stationary element. After completing these preliminary steps, the drive member can be fitted within the elongated opening of the moving element upon bringing the stationary element into proper registry relative to the power housing. Once the stationary tool element is brought into proper registry and located over guide posts, additional means are provided to maintain the tool piece releasably secured against the housing.

Accordingly, the attachment of tool pieces to a power housing as disclosed by Irelan et al. is a cumbersome process requiring various manual alignment steps to be performed by the user with respect to both the tool piece and the power housing. Generally, known power tools do not provide fool-proof mechanisms to allow easy, safe, and automatic alignment and attachment of cutting elements. Instead, users are required to spend time handling and adjusting cutting blades and other movable parts until precise alignments are achieved before a cutting element can be properly attached. Not only is this time consuming, but the user is also exposed to sharp cutting surfaces and powered moving parts in the process.

A need exists for a power tool having interchangeable cutting assemblies that can automatically align themselves into an operative position without requiring cumbersome and dangerous operated-assisted adjustments. A need also exists for interchangeable cutting assemblies that can be readily and safely latched to and selectively released from an operative position whenever desired by the user. There also exists a need for interchangeable cutting assemblies that can be safely and easily manipulated by a user.

The present teachings relate to a power tool and system having readily interchangeable cutting assemblies for cutting and trimming vegetation. The present teachings also relate to a method of attaching a blade carrier assembly to a power tool main body.

According to various embodiments, the power tool includes a main body portion including a housing, a selectively actuatable motor operatively arranged with the housing and including a rotary output, and a rotary drive element arranged in operative contact with the rotary output of the motor and including a resiliently biased drive pin. A blade carrier assembly is capable of being selectively and removably attached to the main body portion. The blade carrier assembly includes a moveable blade portion having a drive pin slot. Upon attaching the blade carrier assembly to the main body portion and actuating the motor, the resiliently biased drive pin is rotatable to a position such that the drive pin is resiliently forced into the drive pin slot of the moveable blade portion.

According to various embodiments, the power tool system includes a main common body portion including a housing, a selectively actuatable motor operatively arranged within the housing and including a rotary output, and a rotary drive element arranged in operative contact with the rotary output of the motor. The rotary drive element includes an engageable drive structure. A plurality of blade carrier assemblies each include a blade carrier cup that is capable of being removably attached to the main common body portion by way of a latching mechanism. The blade carrier cup is arranged to support a cutting blade assembly such that the cutting blade assembly can be safely handled by the user by manipulation of the blade carrier cup. The cutting blade assembly includes a moveable blade portion capable of operative connection with the engageable drive structure of the rotary drive element.

According to various embodiments, the method of attaching a working assembly to a power tool main body is provided. The method includes providing the power tool main body with a selectively actuatable motor arranged to drive a rotary drive element including a resiliently biased drive pin and providing the working assembly, such as a blade carrier assembly, with a moveable working piece portion having a drive pin engageable structure. The method further includes connecting the working assembly to the power tool main body such that the resiliently biased drive pin is displaced if the drive pin is not aligned with the drive pin engageable structure, and then actuating the motor to rotate the rotary drive element to a position such that the drive pin is resiliently forced into the drive pin engageable structure to actuate the working assembly.

Additional features and advantages of various embodiments will be set forth in part in the description that follows, and in part will be apparent from the description, or may be learned by practice of various embodiments. The objectives and other advantages of various embodiments will be realized and attained by means of the elements and combinations particularly pointed out in the description herein.
Figure 1 is a perspective view of a power tool device and system including an additional, unattached blade carrier assembly according to various embodiments;
Figure 2 is a perspective view of the power tool device of Figure 1 showing a blade carrier assembly in an unlatched position according to various embodiments;
Figure 3 is a top perspective view of an interchangeable blade carrier assembly according to various embodiments;
Figure 4 is a bottom perspective view of the main body of the power tool device of Figure 1 with the interchangeable blade carrier assembly removed
Figure 5 is an exploded perspective view of a drive motor assembly including a first embodiment of a resiliently biased rotary drive element;
Figure 6 is a perspective view of a second embodiment of a resiliently biased rotary drive element including a spur gear having a resiliently mounted drive pin arranged thereon; and
Figure 7 is a perspective view of the second embodiment of the resiliently biased rotary drive element of Figure 6 shown in a disassembled condition.

It is to be understood that both the foregoing general description and the following detailed description are exemplary and explanatory only, and are intended to provide an explanation of various embodiments of the present teachings.

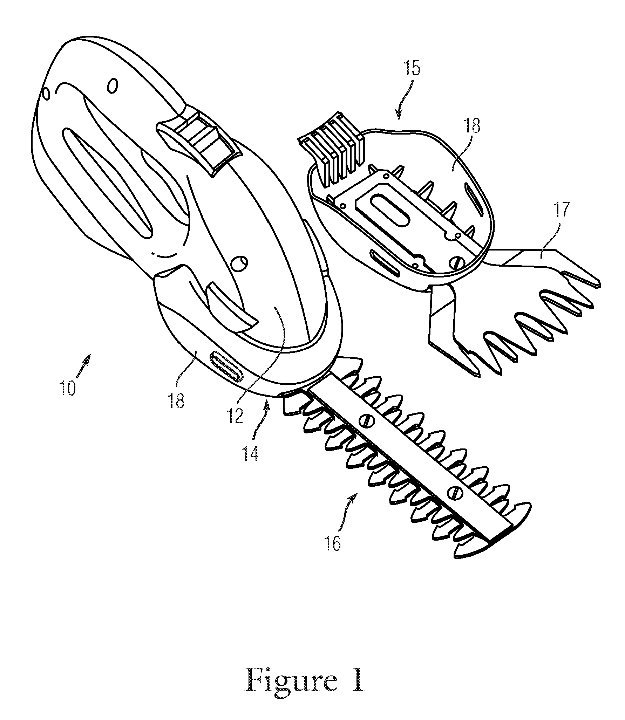

A power tool device 10 and a system for cutting and trimming vegetation is shown in Figure 1. The power tool device 10 can be a handheld unit for cutting grass, weeds, and other types of vegetation around a house or business, or any other location where unwanted growth is found. The power tool device 10 can be part of a system or kit that allows a user to perform various different cutting functions using a common main tool body 12. The power tool system can include a plurality of interchangeable blade carrier assemblies 14, 15 that can be releasably attached to the common main body portion 12. For example, as shown in Figure 1, the common main tool body 12 is shown attached to an interchangeable blade carrier assembly 14 that comprises a shrubber blade subassembly 16. Furthermore, adjacent to the power tool device 10 is an unattached interchangeable blade carrier assembly 15 that comprises a shear blade subassembly 17. Referring to the unattached interchangeable blade carrier assembly 15, each blade carrier assembly can include a blade carrier cup portion 18 and one of a plurality of different blade subassembly portions 17. In the preferred embodiment, the blade carrier cup portion 18 is the same for both the shrubber blade 16 interchangeable blade carrier assembly 14 and the shearing blade 17 interchangeable blade carrier assembly 15. As will be discussed below, the blade carrier cup portion 18 allows the interchangeable blade carrier assembly 14, 15 to be safely handled and manipulated by a user, as well as easily attached and removed from the common main tool body portion 12.

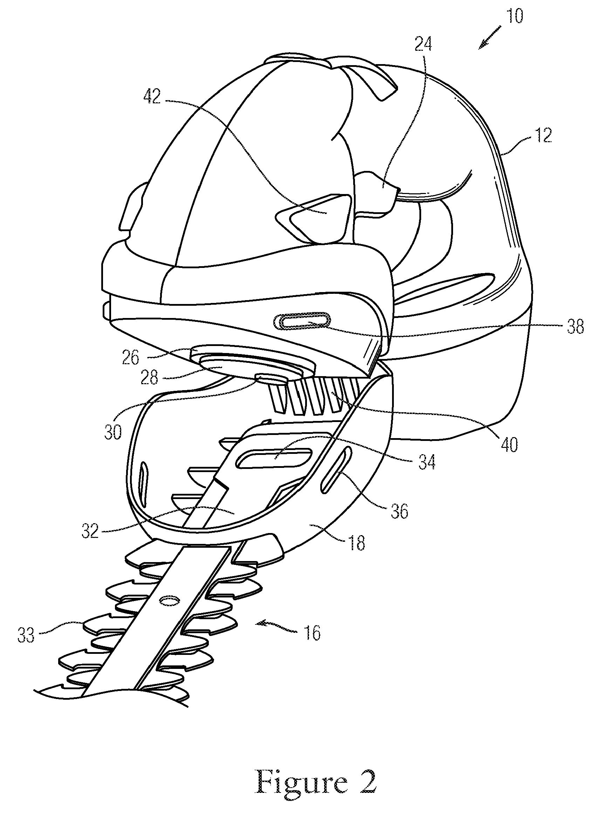

Referring to Figure 2, a close-up view of the power tool device 10 of Figure 1 is provided. The power tool device 10 is shown in a position whereby an interchangeable blade carrier assembly 14 (including a shrubber blade subassembly 16) is in the process of being latched onto or unlatched from the common main tool body 12. The positioning of the structure shown in Figure 2 shows how power can be transferred from the common main tool body 12 to the blade subassembly portion 16 of an interchangeable blade carrier assembly 14.

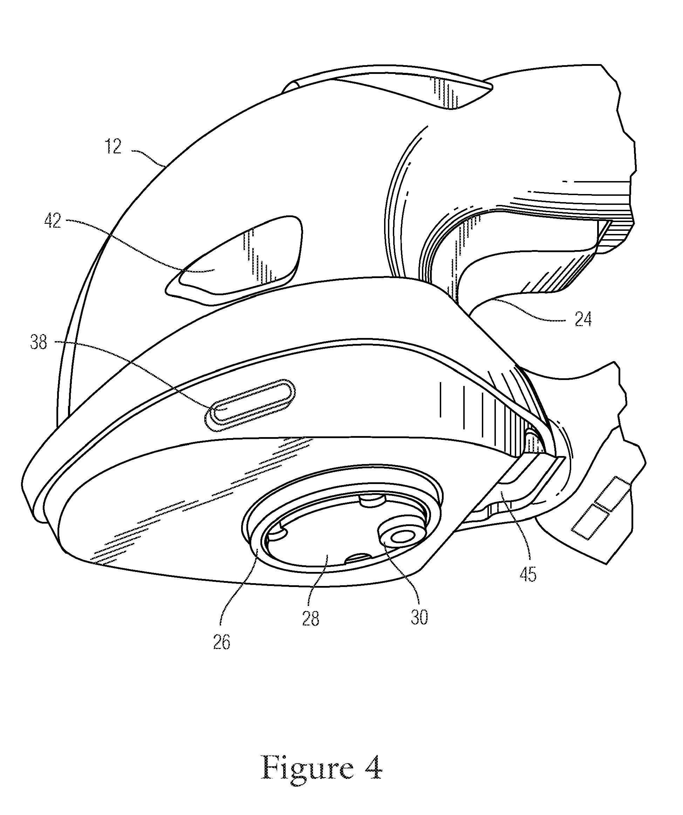

On the common main tool body 12, a trigger switch 24 allows the user to selectively control power to a motor arranged within the housing of the common main tool body 12. In a preferred embodiment, the main tool body also includes a battery pack for providing energy to the motor enabling the power tool device to be cordless device. The details of the drive motor assembly will be described below with respect to the discussion of Figure 4. According to various embodiments, the motor is operable to rotate a rotary drive element 26. As shown in Figure 2, the rotary drive element 26 can include a drive plate 28 and a drive pin 30. The drive pin 30 may be integrally attached or formed with the drive plate 28. The drive pin 30 can be eccentrically arranged on the drive plate 28.

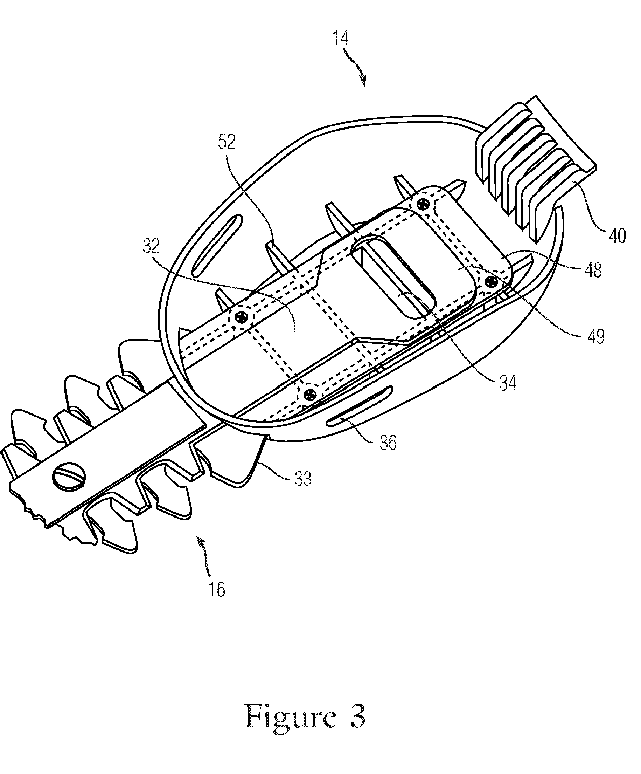

On the interchangeable blade carrier assembly 14, one or more movable blades 32, 33 can be reciprocally arranged with respect to the blade carrier cup 18. In a preferred embodiment, the power tool device 10 has one moveable blade 32 which sits on top of and works with a stationary blade 33 for providing a cutting action. As shown in Figure 2, the movable blade 32 includes a drive pin slot 34 for engagement with the drive pin 30 of the rotary drive element 26. The blade carrier cup 18 can attach to the common main tool body 12 by way of a latching mechanism. The latching mechanism may include one or more latch apertures or detents 36 formed on the blade carrier cup 18. The apertures or detents 36 may be completely cut through the blade carrier cup 18 housing as shown in Figure 2 or may be a recess on the interior housing of the blade carrier cup 18 and, therefore, not visible or evident from the exterior housing of the blade carrier cup assembly 18. The latching mechanism might also include one or more resiliently biased latch elements 38 formed on the common main tool body 12. The resiliently biased latch elements 38 may be partially or fully retractable into the common main tool body 12 and are resiliently biased outwardly in their non-actuated position. As will be further described in conjunction with Figure 3, the blade carrier cup 18 may have mating hook 40 for mating with and insertion into a recess or aperture in the main tool body 12. The blade carrier cup 18 is attached to the main tool body 12 by inserting the mating hook 40 into an aperture 45 (see Figure 4) in the main tool body 12 and then bringing the forward end of the blade carrier cup 18 into engagement with the main tool body 12 until the latch elements 38 snap into engagement with the latch apertures or detents 36 formed on the blade carrier cup 18. In the engaged position, the power tool device 10 is assembled and ready to perform a cutting operation.

On the common main tool body 12, one or more latch release pushbuttons 42 can be arranged in a position for convenient actuation by the fingers and/or thumb of a user. The one or more latch release pushbuttons 42 can be mechanically coupled with the latch elements 38. Accordingly, the latch elements 38 can be retracted from the blade carrier cup 18 by depressing at least one of the latch release pushbuttons 42 thereby releasing the blade carrier assembly 14 from the common main tool body 12.

A detailed top view of a blade carrier cup portion 18 of an interchangeable blade carrier assembly 14 is shown in Figure 3. The blade carrier cup portion 18 may have a concave shape that defines a generally concave interior. The concave interior of the cup portion 18 can be defined by a bottom surface and at least one sidewall surface. The blade carrier cup portion 18 can be arranged to engage a complimentary convex-shaped portion of the main common body portion 12. In a preferred embodiment, the blade carrier cup 18 is made of a hard resilient plastic which covers the complete underside of the blade subassembly 16, 17 (except for the cutting end) to enable a user to grab the blade carrier cup 18 and attach or remove the interchangeable blade carrier assembly 14, 15 without needing to touch the blades 32, 33.

In Figure 3, an interchangeable blade carrier assembly 14, 15 is shown with a shrubber blade subassembly 16 operatively connected a bottom interior surface of the blade carrier cup portion 18. As discussed above, in a preferred embodiment the shrubber blade subassembly 16 may include at least two cutting elements or blades, an upper movable cutting element 32 and a lower stationary cutting element 33. The lower stationary cutting element 33 can include a stationary blade end 48 that can be secured in the blade carrier cup 18. A movable blade end 49 of the upper movable cutting element 32 may also be arranged within the blade carrier cup 18. A drive pin slot 34 may be formed in movable cutting element blade 32 for engagement with the drive pin 30 of the rotary drive element 26. A track or guide mechanism 52 can be arranged on either side of the stationary cutting element 33 or the movable cutting element 32 for placement during fabrication or to guide the movable cutting element 32 as it reciprocates in a direction into and away from the housing.

At one end of the blade carrier cup portion 18, a blade carrier cup hook 40 can be arranged for engagement with the common main tool body 12. The blade carrier cup hook 40 may be inserted into an aperture 45, as seen in Figure 4, in the main tool body 12 to provide engagement at the back end of the blade carrier cup 18 with the main tool body 12. When the blade carrier cup 18 is disengaged the common main tool body 12, as shown in Figure 2, the blade carrier cup hook 40 can be disengaged from the common main tool body 12 and replaced with a different interchangeable blade carrier assembly 14,15.

Figure 4, provides a perspective view of the bottom of the main body 12 of the power tool device 10. The drive pin 30, drive plate 28 and rotary drive element 26 can be seen as the interchangeable working assembly 14, 15 is removed. Further, the latch release pushbuttons 42 may be mechanically coupled with the latch elements 38 for securing and releasing the interchangeable working assemblies or blade assemblies 14, 15. In addition, the main body 12 includes an aperture 45 for mating with and receiving the cup hook portion 40 of the blade carrier cup 18.

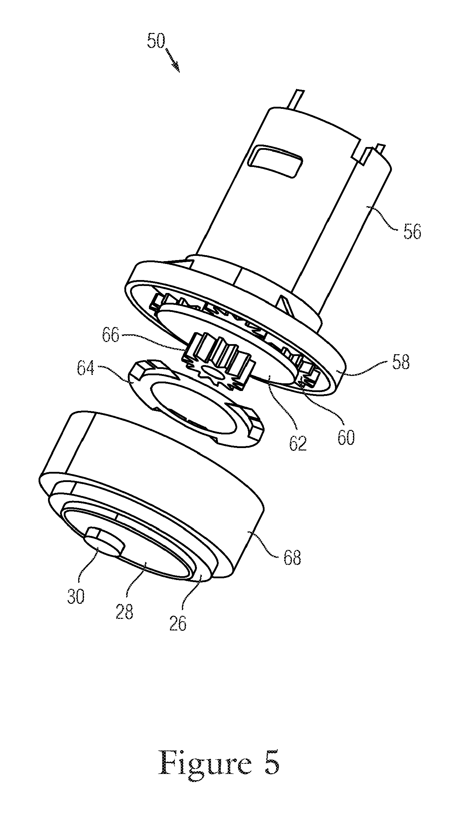

Referring to Figure 5, a drive motor assembly 50 for the power tool device 10 is shown. The drive motor assembly 50 may include an electric motor 56 that can power a resiliently biased rotary drive element 26. As shown in Figure 5, the electric motor 56 can be operatively attached to a gearbox assembly 58 that can provide power to a drive gear 66. The gearbox assembly 58 may include a gear train, including, for example, a planetary gear arrangement 60. A support surface 62 can be arranged along a portion of the drivetrain of the drive motor assembly. For example, the support surface 62 can be arranged adjacent to the planetary gear arrangement 60. The support surface 62 can provide a smooth surface upon which a spring 64, such as, for example, a spring washer 64, can be supported.

The drive gear 66 can be operatively connected with the planetary gear arrangement 60 and can provide rotary power to the rotary drive element 26. As shown in Figures 2, 4 and 5, the rotary drive element 26 can include a drive plate 28 having an eccentrically arranged drive pin 30 arranged or formed thereon. The rotary drive element 26 can rotate with respect to a rotary drive element housing 68. The rotary drive element housing 68 can attach with the gearbox assembly 58 to form the drive motor assembly structure.

In the assembled state of the drive motor assembly 50 structure, the spring 64 resiliently forces the rotary drive element 26 in a direction away from the motor 56 such that the rotary drive element 26 is forced against the rotary drive element housing 68. The rotary drive element 26 can move a distance into the rotary drive element housing 68 against the resilient force of the spring 64. For example, referring to Figures 2, 4, and 5, the rotary drive element 26 would be forced into the rotary drive element housing 68 against the force of spring 64, if the drive pin 30 is not aligned with the drive pin slot 34 of moveable blade 32 when the blade carrier assembly 14 is brought into engagement with the main tool body 12. When the motor 56 is energized by having the user depress the trigger 24, the drive plate 28, and in turn, the drive pin 30 are rotated until the resiliently biased drive pin 30 snaps or clicks into the drive pin slot 34 of one or more moveable blades 32. Once engaged in the drive pin slot 34, the drive pin 30 can continue to be rotated by the motor 56 to reciprocate moveable blade 32 and achieve a cutting action against stationary blade 33. Thus, there is no need for the user to make any preliminary alignments with respect to the drive pin 30, the drive pin slot 34, or the blade carrier assembly 14, 15.

To replace or interchange blade carrier assemblies 14, 15, for example, to change from a shrubber blade assembly 14 to a shear blade assembly 15, the user can depress one or more of the latch release pushbuttons 42. Depressing the latch release pushbuttons 42 results in the latch elements 38 being retracted such that they no longer project into or through the latch apertures or detents 36 formed on the blade carrier cup portion 18 of the blade carrier assembly 14, 15. The user can then remove the blade carrier assembly 14 by moving the blade carrier cup 18 downwardly with respect to the common main tool body 12 and removing the cup mating hook 40 from the recess or aperture 45 within the main tool body 12. At this point, the blade carrier assembly 14 can be safely detached from the common main tool body 12 and discarded by grasping the blade carrier cup portion 18 and removing it from the common main tool body 12.

A new blade carrier assembly 14, 15 can then be attached to the common main tool body 12 by the user grasping the blade carrier cup portion 18 and placing the blade carrier cup hook 40 into the main tool body recess or aperture 45 within the common main tool body 12. The front portion of the blade carrier cup portion 18 can then be brought into engagement with the main tool body 12 until the resilient latch elements 38 engage with the latch apertures or detents 36 formed on the carrier cup 18. As discussed above, when the trigger 24 is depressed, the resiliently biased rotary drive element 26 will rotate until the spring biased drive pin 30 snaps or clicks into engagement with the moveable blade drive slot 34 of the blade assembly 16.

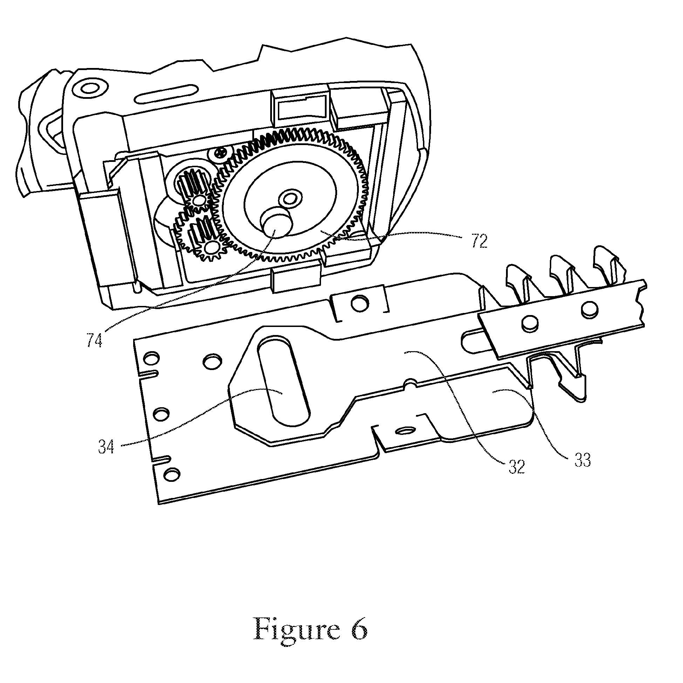

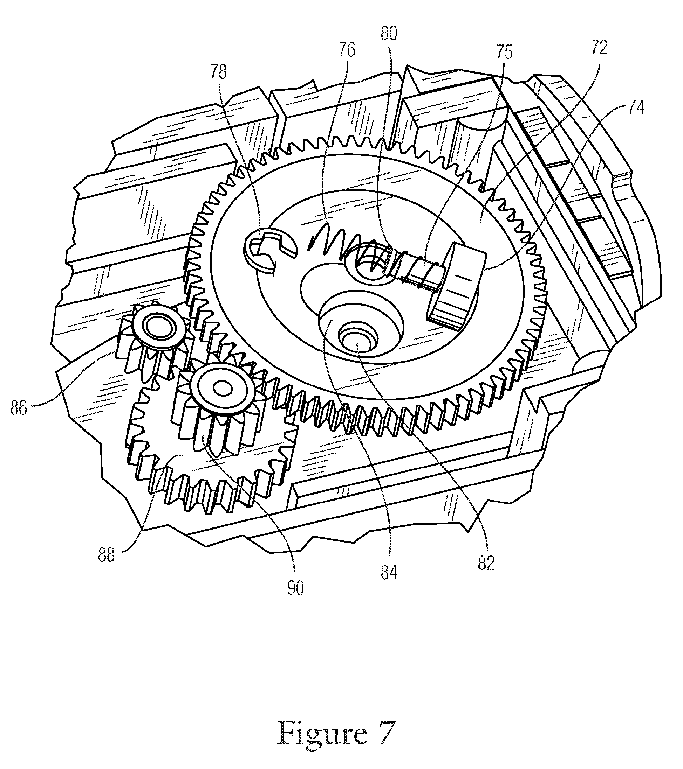

Referring to Figures 6 and 7, another embodiment of a resiliently biased rotary drive element is shown. The resiliently biased rotary drive element can include a spur gear 72 that can be driven by a drive motor assembly by way of a drive gear 90. The spur gear 72 can be arranged to support an eccentrically located and resiliently biased drive pin 74. The drive pin 74 can be resiliently biased in a direction away from the spur gear 72 and can be pushed in a direction towards and into the spur gear 72 against the resilient force. Thus, the resiliently biased rotary drive element includes a rotatable spur gear 72 and a resiliently biased drive pin 74 supported thereon.

Referring to Figure 7, details of the resiliently biased rotary drive element are shown. To more clearly show the structural details, the drive pin 74 is shown removed from a countersunk or stepped aperture formed in the spur gear 72, along with a disassembled C-clip 78 and spring 76. The drive pin 74 can include a shaft portion 75 and an enlarged head portion. In an operative position, the shaft portion 75 of the drive pin 74 can be arranged to extend in a through hole 82 that passes through the spur gear 72. An enlarged, coaxially arranged borehole 84 formed in the spur gear 72 can accommodate the enlarged head portion of the drive pin 74.

The drive pin 74 can be resiliently biased by way of a spring 76. One end of the spring 76 can engage a flat surface formed at the intersection between the throughhole 82 and the enlarged aperture borehole 84, and the other end of the spring 76 can engage a backside of the head portion of the drive pin 74. The spring 76 can be arranged about the shaft portion 75 and is operable to bias the drive pin 74 such that the enlarged head portion is forced beyond a surface of the spur gear 72.

To secure the drive pin 74 within the aperture of the spur gear 72, a drive pin securing mechanism 78, such as a C-clip, can be used to engage an end of the shaft portion 75 of the drive pin 74. The C-clip 78 can clamp onto the drive pin 74 at the back side of the spur gear 72. For example, the C-clamp 78 can clamp into a groove 80 formed on the end of the drive pin 74. The securing mechanism 78 operates to prevent the spring 76 from forcing the drive pin 76 out of the aperture formed in the spur gear 72.

Referring to Figure 7, an exemplary gear train arrangement for transferring power from the motor (not shown) to the spur gear 72 is shown. The gear train arrangement can include a motor-driven input drive gear 86, a lower gear 88, and an upper gear 90 coaxially arranged with the lower gear 88 and in driving engagement with the spur gear 72. According to various embodiments, other gear train arrangements could also be employed to drive the spur gear 72.

The attachment of an interchangeable blade carrier assembly 14 to the main body portion including the resiliently biased rotary drive element of Figures 6 and 7 will now be described. As shown in Figure 6, the resiliently biased drive pin 74 will be forced into the spur gear 72 if the drive pin 74 is misaligned with the drive pin slot 34 of the moveable blade 32. In such a misaligned position, when the motor is energized, the spur gear 72, and in turn, the drive pin 74 are rotated until the resiliently biased drive pin 74 snaps or clicks into the drive pin slot 34 of moveable blade 32. Once engaged in the drive pin slot 34, the drive pin 74 can continue to be rotated by the motor thereby reciprocating moveable blade 32 and providing a cutting action against stationary blade 33. Thus, there is no need for the user to make any initial alignment of the drive pin 74 with the drive pin slot 34.

The present invention provides the user with a hassle-free working assembly or blade assembly attachment mechanism and process which provides automatic engagement between the motor and drive pin to the working assembly or blade assembly. Further, the partial housing or casing around the blade assembly enables the user to attach and remove the interchangeable blades without the concern of touching the working members or blades. Still further, the quick release and latch mechanisms enable the suer to quickly and easily disengage the working assemblies through the use of the release buttons or mechanism which are located separate from the working assemblies providing a safe release mechanism enabling the user to release and remove the working assemblies without the need to contact the working members or blades.

Those skilled in the art can appreciate from the foregoing description that the present teachings can be implemented in a variety of forms. Therefore, while these teachings have been described in connection with particular embodiments and examples thereof, the true scope of the present teachings should not be so limited. Various changes and modifications may be made without departing from the scope of the teachings herein.

## Claims

1. A power tool system comprising:
a main common body portion including;
a housing;
a selectively actuatable motor operatively arranged with the housing and including a rotary output; and
a rotary drive element arranged in operative contact with the rotary output of the motor, the rotary drive element including an engageable drive structure; and
a plurality of blade carrier assemblies each including a blade carrier cup that is capable of being removably attached to the main common body portion by way of a latching mechanism, the blade carrier cup being arranged to support a cutting blade assembly such that the cutting blade assembly can be safely handled by the user by manipulation of the blade carrier cup, the cutting blade assembly including a moveable blade portion capable of operative connection with the engageable drive structure of the rotary drive element.

2. The power tool system of claim 1, wherein each of the blade carrier cups are cup-shaped with a concave interior defined by a bottom surface and at least one sidewall surface.

3. The power tool system of claim 2, wherein the blade carrier cups are arranged to engage with a complimentary convex-shaped portion of the housing when attached to the main common body portion.

4. The power tool system of claim 1, wherein the latching mechanism includes at least one pushbutton arranged on the main common body portion and capable of releasing the blade carrier cup from the main common body portion upon being depressed.

5. The power tool system of claim 1, wherein each blade carrier cup includes a cup hook that mates with an aperture on the main common body portion.

6. The power tool system of claim 1, wherein the latching mechanism includes at least one detent formed on the blade carrier cup and at least one resiliently biased latch element arranged on the main common body portion and capable of being retracted towards the main common body portion against a resilient force, each of the latch elements being shaped and positioned so as to snap into engagement with a corresponding detent of the blade carrier cup when the blade carrier cup is moved into an attachment position.

7. The power tool system of claim 6, wherein the at least one detent includes an aperture that extends through the blade carrier cup.

8. The power tool system of claim 6, wherein the common body portion includes at least one pushbutton operatively arranged with the at least one resiliently biased latch element and capable of retracting at least one latch element to release the blade carrier cup from the attachment position.

9. The power tool system of claim 8, wherein the latch release pushbuttons are mechanically coupled with the latch elements thereby allowing the latch elements to be retracted to release the blade carrier assembly when at least one pushbutton is depressed.
